# EUROPEAN PATENT APPLICATION

(11) **EP 4 529 285 A1**
(43) Date of publication of application: **26.03.2025**
(21) Application number: 23806725.0
(22) Date of filing: 04.05.2023
(51) Int. Cl.: H04W 52/02, H04W 16/28, H04W 24/10

(54) **METHOD AND DEVICE FOR ACTIVATING PARTIAL RESOURCES OF CELL**

(30) Priority: 19.05.2022 CN 202210557996
(71) Applicant: Datang Mobile Communications Equipment Co., Ltd., Beijing 100085 (CN)
(72) Inventor: LIU, Aijuan, Beijing 100085 (CN); FU, Jing, Beijing 100085 (CN); ZHANG, Dajun, Beijing 100085 (CN); CHEN, Li, Beijing 100085 (CN); LIANG, Jing, Beijing 100085 (CN)
(74) Representative: Studio Torta S.p.A.
(86) International application number: PCT/CN2023/092009
(87) International publication number: WO 2023/221773

(57) **Abstract**

Embodiments of the present invention provide a method and device for activating partial resources of a cell. The method is applied to a first base station and comprises: sending a first request message to a second base station to which a target cell belongs, the first request message being used for the second base station to determine an SSB beam needing to be activated in the target cell and/or a bandwidth needing to be activated. By means of the method for activating partial resources of the cell provided in the embodiments of the present invention, information related to measuring and reporting the SSB beam by a terminal is obtained by means of the first base station; when it is determined that the load of the first base station is relatively heavy, a neighboring base station is requested to activate one or more SSB beams in the target cell belonging to said base station and/or is requested to activate part of the bandwidth under said base station, and the neighboring base station avoids activation of the entire target cell on the basis of the request, thereby reducing energy consumption.

## Description

### CROSS-REFERENCES TO RELATED APPLICATIONS

The present application claims priority to Chinese patent application No. 202210557996.0 filed on May 19, 2022, entitled "Method and Device for Activating Partial Resources of Cell", which is hereby incorporated by reference in its entirety.

### FIELD

The present application relates to the field of communications, and in particular, to methods and apparatuses for activating partial resources of cell.

### BACKGROUND

A large number of base stations are generally deployed in a radio mobile communication network, which generally work 24 hours a day constantly. Therefore, the base stations in the mobile communication network consume a lot of power every day.

In case that some cells of a base station need to serve a large number of terminals and have large volume of services, and some cells need to serve a small number of terminals and have small volume of services, on one hand, the cells with heavy loads may unable to bear such heavy loads for a long time, on the other hand, the cells with low loads need to activate all resources of the cells to provide services for the terminals, which results in increased resource consumption and low resource utilization.

A power-saving mechanism is introduced in the radio communication system to reduce power consumption and realize green communication network. The principle is that in case that the network load is low, some cells of a base station are shut down, a neighboring base station is notified, and the cells of other base stations are then used to provide services for saving power. In case that the neighboring base station is under heavy loads or is about to hand over the UE to a power-saving cell, it requests the power-saving cell to start the service. However, in currently, the base station may only request to activate the entire cell when requesting the activation of power-saving cell, which still wastes power. How to activate and deactivate radio network resources in a more fine-grained manner within a cell range is a problem that needs to be solved urgently in the art.

### BRIEF SUMMARY

Embodiments of the present application provide methods and apparatuses for activating partial resources of cell to support activation of partial resources of a neighboring power-saving cell.

An embodiment of the present application provides a method for activating partial resources of cell, performed by a first base station, including:
transmitting a first request message to a second base station to which a target cell belongs, where the first request message is used, by the second base station, to determine a synchronization signal and physical broadcast channel (PBCH) block (SSB) beam that needs to be activated and/or bandwidth that needs to be activated in the target cell,
where the first request message includes at least one of the following:
   first indication information, used to indicate one or more SSB beams requested to be activated;
   second indication information, used to indicate SSB beams to which locations of target terminals belong;
   location information of target terminals;
   a bandwidth part requested to be activated; or
   to-be-offloaded service volume and service volume of each target terminal; and
   an area where the target cell provides services is within a range of an area where a first cell provides services, the first cell belongs to the first base station, and the target terminals are terminals connected to the first cell.

In an embodiment, before transmitting the first request message to the second base station to which the target cell belongs, the method includes:
determining the first request message based on measurement results reported from the target terminals and configuration information of the second base station, and/or service volume of the target terminals and carrying capacity of the first cell,
where the measurement results reported from the target terminals at least include measurement results for one or more SSB beams in the target cell, and the configuration information of the second base station at least includes a coverage area of each SSB beam corresponding to the target cell.

In an embodiment, the method further includes:
obtaining an activated SSB beam and/or activated bandwidth in the target cell based on a received response message transmitted from the second base station,
where the response message transmitted from the second base station includes any or any combination of the activated SSB beam, an unactivated SSB beam or the activated bandwidth.

In an embodiment, the method further includes:
determining the target terminals that need to be handed over to the target cell based on a coverage area corresponding to the activated SSB beam and the location information of the target terminals, and/or the activated bandwidth and the service volume of each target terminal.

In an embodiment, the measurement results reported from the target terminals includes beam-level measurement results and the location information of the target terminals, where the beam-level measurement results include measurement results of one or more SSB beams in a same target cell and measurement results of one or more SSB beams in different target cells.

In an embodiment, the configuration information of the second base station includes configuration information of SSB beam corresponding to all target cells belong to the second base station; and the configuration information of the SSB beam includes a coverage area corresponding to each SSB beam.

An embodiment of the present application further provides a method for activating partial resources of cell, performed by a second base station, including:
determining a synchronization signal and physical broadcast channel (PBCH) block (SSB) beam that needs to be activated and/or bandwidth that needs to be activated in a target cell based on a first request message transmitted from a first base station; and
transmitting a response message to the first base station, where the response message includes any or any combination of an activated SSB beam, an unactivated SSB beam or activated bandwidth in the target cell,
where the first base station is a base station to which all first cells providing services to target terminals belong, areas where the first cells provide services include areas where all the target cells provide services, and the target cells belong to the second base station.

An embodiment of the present application further provides a method for activating partial resources of cell, performed by a terminal, including:
reporting a measurement result to a first cell that provides services for the terminal, where the measurement result at least includes a beam-level measurement result, the beam-level measurement result includes measurement results of one or more SSB beams in a same target cell and measurement results of one or more SSB beams in different target cells; the first cell belongs to a first base station, the target cells belong to a second base station, and an area where the first cell provides services includes an area where the target cell provides services; and
the beam-level measurement results of SSB beam are used, by the first base station, to determine SSB beams and/or bandwidth that need to be activated in the target cell.

An embodiment of the present application further provides a first base station electronic device, including a memory, a transceiver and a processor,
where the memory is used for storing a computer program, the transceiver is used for transmitting and receiving data under control of the processor, and the processor is used for executing the computer program in the memory and performing the following operations:
transmitting a first request message to a second base station to which a target cell belongs, where the first request message is used, by the second base station, to determine a synchronization signal and physical broadcast channel (PBCH) block (SSB) beam that needs to be activated and/or bandwidth that needs to be activated in the target cell,
where the first request message includes at least one of the following:
   first indication information, used to indicate one or more SSB beams requested to be activated;
   second indication information, used to indicate SSB beams to which locations of target terminals belong;
   location information of target terminals;
   a bandwidth part requested to be activated; or
   to-be-offloaded service volume and service volume of each target terminal; and
   an area where the target cell provides services is within a range of an area where a first cell provides services, the first cell belongs to the first base station, and the target terminals are terminals connected to the first cell.

In an embodiment, before transmitting the first request message to the second base station to which the target cell belongs, the operations include:
determining the first request message based on measurement results reported from the target terminals and configuration information of the second base station, and/or service volume of the target terminals and carrying capacity of the first cell,
where the measurement results reported from the target terminals at least include measurement results for one or more SSB beams in the target cell, and the configuration information of the second base station at least includes a coverage area of each SSB beam corresponding to the target cell.

In an embodiment, the operations further include:
obtaining an activated SSB beam and/or activated bandwidth in the target cell based on a received response message transmitted from the second base station,
where the response message transmitted from the second base station includes any or any combination of the activated SSB beam, an unactivated SSB beam or the activated bandwidth.

In an embodiment, the operations further include:
determining the target terminals that need to be handed over to the target cell based on a coverage area corresponding to the activated SSB beam and the location information of the target terminals, and/or the activated bandwidth and the service volume of each target terminal.

In an embodiment, the measurement results reported from the target terminals include beam-level measurement results and the location information of the target terminals, where the beam-level measurement results include measurement results of one or more SSB beams in a same target cell and measurement results of one or more SSB beams in different target cells.

In an embodiment, the configuration information of the second base station includes configuration information of SSB beam corresponding to all target cells belong to the second base station; and the configuration information of the SSB beam includes a coverage area corresponding to each SSB beam.

An embodiment of the present application further provides a second base station electronic device, including a memory, a transceiver and a processor,
where the memory is used for storing a computer program, the transceiver is used for transmitting and receiving data under control of the processor, and the processor is used for executing the computer program in the memory and performing the following operations:
determining a synchronization signal and physical broadcast channel (PBCH) block (SSB) beam that needs to be activated and/or bandwidth that needs to be activated in a target cell based on a first request message transmitted from a first base station; and
transmitting a response message to the first base station, where the response message includes any or any combination of an activated SSB beam, an unactivated SSB beam or activated bandwidth in the target cell,
where the first base station is a base station to which all first cells providing services to target terminals belong, areas where the first cells provide services include areas where all the target cells provide services, and the target cells belong to the second base station.

An embodiment of the present application further provides a terminal electronic device, including a memory, a transceiver and a processor,
where the memory is used for storing a computer program, the transceiver is used for transmitting and receiving data under control of the processor, and the processor is used for executing the computer program in the memory and performing the following operations:
reporting a measurement result to a first cell that provides services for the terminal, where the measurement result at least includes a beam-level measurement result, the beam-level measurement result includes measurement results of one or more SSB beams in a same target cell and measurement results of one or more SSB beams in different target cells; the first cell belongs to a first base station, the target cells belong to a second base station, and an area where the first cell provides services includes an area where the target cell provides services; and
the beam-level measurement results of SSB beam are used, by the first base station, to determine SSB beams and/or bandwidth that need to be activated in the target cell.

An embodiment of the present application further provides an apparatus for activating partial resources of cell and for use in a first base station, including:
a first transmitting module, used for transmitting a first request message to a second base station to which a target cell belongs, where the first request message is used, by the second base station, to determine a synchronization signal and physical broadcast channel (PBCH) block (SSB) beam that needs to be activated and/or bandwidth that needs to be activated in the target cell,
where the first request message includes at least one of the following:
   first indication information, used to indicate one or more SSB beams requested to be activated;
   second indication information, used to indicate SSB beams to which locations of target terminals belong;
   location information of target terminals;
   a bandwidth part requested to be activated; or
   to-be-offloaded service volume and service volume of each target terminal; and
   an area where the target cell provides services is within a range of an area where a first cell provides services, the first cell belongs to the first base station, and the target terminals are terminals connected to the first cell.

An embodiment of the present application further provides an apparatus for activating partial resources of cell and for use in a second base station, including:
a determining module, used for determining a synchronization signal and physical broadcast channel (PBCH) block (SSB) beam that needs to be activated and/or bandwidth that needs to be activated in a target cell based on a first request message transmitted from a first base station; and
a second transmitting module, used for transmitting a response message to the first base station, where the response message includes any or any combination of an activated SSB beam, an unactivated SSB beam or activated bandwidth in the target cell,
where the first base station is a base station to which all first cells providing services to target terminals belong, areas where the first cells provide services include areas where all the target cells provide services, and the target cells belong to the second base station.

An embodiment of the present application further provides an apparatus for activating partial resources of cell and for use in a terminal, including:
a third transmitting module, used for reporting a measurement result to a first cell that provides services for the terminal, where the measurement result at least includes a beam-level measurement result, the beam-level measurement result includes measurement results of one or more SSB beams in a same target cell and measurement results of one or more SSB beams in different target cells; the first cell belongs to a first base station, the target cells belong to a second base station, and an area where the first cell provides services includes an area where the target cell provides services; and
the beam-level measurement results of SSB beam are used, by the first base station, to determine SSB beams and/or bandwidth that need to be activated in the target cell.

An embodiment of the present application further provides a computer readable storage medium storing a computer program that causes a computer to perform steps of the above-mentioned method for activating partial resources of cell performed by the first base station, the second base station or the terminal.

An embodiment of the present application further provides a communication device storing a computer program that causes the communication device to perform steps of the above-mentioned method for activating partial resources of cell performed by the first base station, the second base station or the terminal.

An embodiment of the present application further provides a processor readable storage medium storing a computer program that causes a processor to perform steps of the above-mentioned method for activating partial resources of cell performed by the first base station, the second base station or the terminal.

An embodiment of the present application further provides a chip product storing a computer program that causes the chip product to perform steps of the above-mentioned method for activating partial resources of cell performed by the first base station, the second base station or the terminal.

In the methods and apparatuses for activating partial resources of cell provided by the embodiments of the present application, in case that the base station determines that its load is heavy through SSB beam associated information measured and reported from the terminal, the base station requests the neighboring base station to activate one or more SSB beams in the target cell belongs to the neighboring base station and/or requests to activate the bandwidth part under the neighboring base station, which avoids that the neighboring base station activates the entire target cell based on the request, and saves power consumption.

### BRIEF DESCRIPTION OF THE DRAWINGS

In order to illustrate the solutions disclosed in the embodiments of the present application or the related art more clearly, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of 5th generation (5G) network architecture and involved interfaces in the related art;
FIG. 2 is a schematic diagram of a scenario where cells overlap under a power-saving mechanism;
FIG. 3 is a schematic diagram of a coverage area corresponding to beamforming;
FIG. 4 is a first schematic flowchart of a method for activating partial resources of cell according to an embodiment of the present application;
FIG. 5 is a second schematic flowchart of a method for activating partial resources of cell according to an embodiment of the present application.
FIG. 6 is a third schematic flowchart of a method for activating partial resources of cell according to an embodiment of the present application;
FIG. 7 is a first schematic implementation flowchart of a method for activating partial resources of cell according to an embodiment of the present application;
FIG. 8 is a second schematic implementation flowchart of a method for activating partial resources of cell according to an embodiment of the present application;
FIG. 9 is a third schematic implementation flowchart of a method for activating partial resources of cell according to an embodiment of the present application;
FIG. 10 is a fourth schematic implementation flowchart of a method for activating partial resources of cell according to an embodiment of the present application;
FIG. 11 is a fifth schematic implementation flowchart of a method for activating partial resources of cell according to an embodiment of the present application;
FIG. 12 is a first schematic structural diagram of a first base station device according to an embodiment of the present application;
FIG. 13 is a second schematic structural diagram of a second base station device according to an embodiment of the present application;
FIG. 14 is a schematic structural diagram of a terminal device according to an embodiment of the present application;
FIG. 15 is a first schematic structural diagram of an apparatus for activating partial resources of cell according to an embodiment of the present application;
FIG. 16 is a second schematic structural diagram of an apparatus for activating partial resources of cell according to an embodiment of the present application; and
FIG. 17 is a third schematic structural diagram of an apparatus for activating partial resources of cell according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate understanding the solutions of the embodiments of the present application, contents related to the present application are introduced as follows.

### 1. 5th generation (5G) network architecture

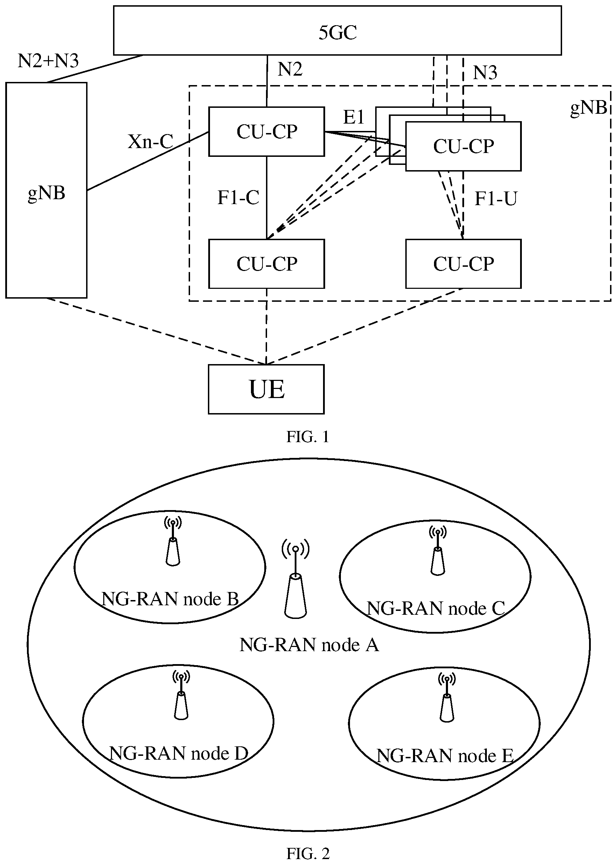

FIG. 1 is a schematic diagram of 5G network architecture and involved interfaces in the related art. As shown in FIG. 1, in new radio (NR) and similar systems, a radio access network node (RAN node) in logical may be further divided into a central unit-control plane (CU-CP), one or more central units-user plane (CU-UPs), and one or more distributed units (DUs). This structure is referred to as "CU-CP/UP split". The CU-CP and DU are connected through the F1-C interface or a similar interface, and the CU-CP and CU-UP are connected through the E1 interface or a similar interface. The control plane connection between the RAN node and the core network/other next generation radio access network (NG-RAN) nodes ends at the CU-CP, the user plane connection ends at the CU-UP, and the air interface connection between the RAN node and the mobile terminal ends at the DU.

gNB-CU-CP refers to the control plane part in the central unit (CU) of gNB, which is the most core part of gNB. gNB-CU-CP is connected to the 5G core network through the N2 interface, and is specifically connected to the access and mobility management function (AMF) through the NG-C interface (NG-C interface is the control plane part of the NG interface). Two neighboring gNBs are connected through the Xn interface. Each user equipment (UE) may be connected to multiple gNB-CU-CPs simultaneously, but only one of them is the main gNB-CU-CP, and there is an N2 context related to the UE between the main gNB-CU-CP and the AMF. The gNB-CU-CPs of different gNBs are connected through the Xn-C interface. According to its own policy, the gNB-CU-CP maps one or more quality of service (QoS) flows in each session to a radio bearer for air interface transmission. The gNB-CU-CP is also responsible for transmitting radio resource control (RRC) messages to the UE to indicate the UE how to configure the air interface link. These RRC messages are transmitted and received through the packet data convergence protocol (PDCP) layer.

gNB-CU-UP refers to the user plane part in the CU of gNB. The gNB-CU-CP manages the gNB-CU-UP through the E1 interface, for example, requesting the gNB-CU-UP to establish, modify, and release the transmission channel for service data. In principles, the gNB-CU-UP interacts, in the north, service data with the user plane function (UPF) through the N3 interface, and interacts, in the south, service data with the gNB-DU through the F1-U interface.

gNB-DU refers to the distributed unit (DU) in the gNB. The gNB-CU-CP manages the gNB-DU through the F1-C interface, for example, requesting the gNB-DU to establish, modify, and release air interface resources. The protocol layers corresponding to the gNB-DU mainly include radio link control (RLC), media access control (MAC), physical (PHY), and radio frequency (RF).

### 2. Power-saving mechanism

A traditional cell power-saving mechanism is for the scenario with overlapping, that is, some NG-RAN nodes provide basic coverage, and some NR cells with low transmission power are used as hotspot cells. The coverage range of the hotspot cells is within the range of the basic coverage provided by the NG-RAN nodes. As shown in FIG. 2, NG-RAN node A provides basic coverage, and other hotspot cells, such as NG-RAN node B, NG-RAN node C, NG-RAN node D and NG-RAN node E provide hotspot coverage.

In an overlapping scenario, the main function of the hotspot cells is to provide higher network capacity. When the load in the network is high, these hotspot cells need to be started (i.e. activated) to provide the required services to users. When the load is low, the cells that provide basic coverage provide services to users, and the hotspot cells may be shut down (i.e. deactivated) to save power.

The cell activation/deactivation mechanism is illustrated as follows. In the cell activation state, the cell operates normally, that is, the cell may transmit various physical layer signals and transmit data normally; in the cell deactivation state, the cell may only transmit some specific signals, cannot transmit and receive data with a UE, and the UE cannot establish a connection with the cell.

The specific hotspot cell deactivation mechanism mainly includes the following:
(1) controlling based on the operation and maintenance mechanism (OAM);
(2) autonomously deactivating, by the base station providing hotspot coverage, all/part of the cells in case that there is no service data; and
(3) controlling based on a macro base station.

After the hotspot cell is deactivated, once the load of the cell that provides basic coverage exceeds the level it may bear, one or more hotspot cells need to be activated. In case that the cell that provides basic coverage is a 5G cell, the cell activation procedure of the Xn interface may be used; in case that the cell that provides basic coverage is an evolved packet system (EPS) cell, the NG/S1 message procedure is required to reactivate the hotspot cell.

For the overlapping scenario, in case that the hotspot cell is deactivated, users in the geographic area the hotspot cell originally covered may be served by the basic coverage cell, that is, there is no coverage gaps for radio signals, and the users will not drop calls due to lack of network coverage.

### 3. Beamforming

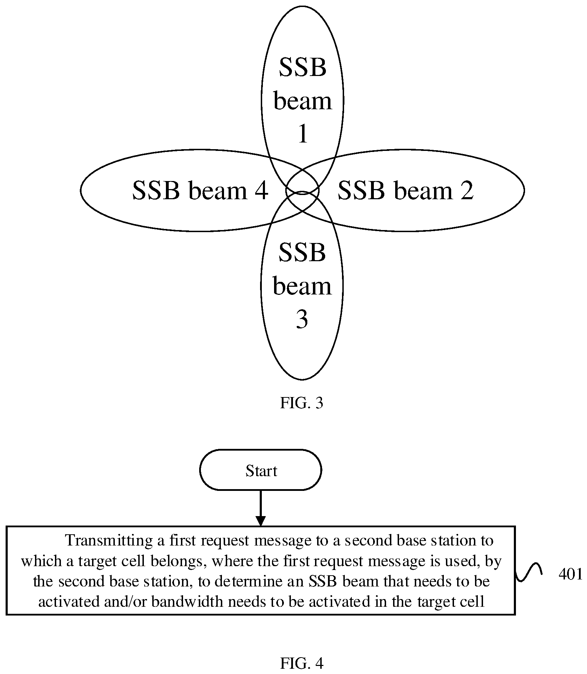

The frequency band supported by NR is high, and the propagation loss is large. It is necessary to use the transmission mode of beamforming to increase the coverage of radio signals. Since the coverage angle of each beam is limited, NR covers the service range of an entire cell through beam scanning. The beam scanning refers to transmitting a reference signal through a physical channel using beams in different directions at different times. A cell generally needs to transmit multiple synchronization signal and physical broadcast channel (PBCH) blocks (SSBs) to complete a beam scanning, to make the synchronization signal cover the service range of the entire cell. The SSBs required to complete a beam scanning constitute an SSB burst set. The schematic diagram of the coverage area corresponding to beamforming is shown in FIG. 3.

FIG. 4 is a first schematic flowchart of a method for activating partial resources of cell according to an embodiment of the present application. The method may be performed by a first base station. As shown in FIG. 4, the method includes the following steps.

Step 401: transmitting a first request message to a second base station to which a target cell belongs, where the first request message is used, by the second base station, to determine a synchronization signal and physical broadcast channel (PBCH) block (SSB) beam that needs to be activated and/or bandwidth that needs to be activated in the target cell;
the first request message includes at least one of the following:
first indication information, used to indicate one or more SSB beams requested to be activated;
second indication information, used to indicate the SSB beams to which locations of target terminals belong;
location information of target terminals;
a bandwidth part requested to be activated; or
to-be-offloaded service volume and service volume of each target terminal; and
an area where the target cell provides services is within a range of an area where a first cell provides services, the first cell belongs to the first base station, and the target terminals are terminals connected to the first cell.

In an embodiment, a traditional cell power-saving mechanism is for scenarios with overlapping. For example, a range where some NG-RAN nodes (base stations) provide services includes ranges where one or more NR cells with low transmission power provide services. The cells corresponding to the above-mentioned NG-RAN nodes (base stations) with a larger service range generally provide basic coverage to the terminals. The NR cells with low transmission power, also known as hotspot cells, generally provide hotspot coverage to the terminals, and their main function is to provide higher network capacity. In case that the load in the network is high, these hotspot cells need to be turned on (i.e. activated) to provide the required services to users; in case that the load in the network is low, the terminals are mainly provided with services by the cells that provide basic coverage, and these hotspot cells may be turned off (i.e. deactivated) based on requirements to save power.

The cell activation mainly refers to that normal transmission and reception of various physical layer signals and related data transmission may be performed between a cell and a terminal. The cell deactivation mainly refers to that a cell may only transmit some specific signals, but cannot perform signaling interaction and data reception and transmission with a terminal, and the terminal cannot establish a connection with the cell.

In case that the base station that provides hotspot coverage decides to deactivate a cell under it, the UE in the connected state in the cell may be handed over to other cells, and the handover reason may be indicated in the handover request to prevent these cells from handing over the UE to the deactivated cell again. In addition, after deactivating one or some cells under the base station that provides hotspot coverage, the base station notifies the neighboring base stations through interfaces between the base stations which cells under it has been deactivated.

After the hotspot cell is deactivated, once the load of the cell that provides basic coverage exceeds the load it may bear, one or more hotspot cells need to be activated to meet the requirements of the terminals for different services.

In the present application, the base station corresponding to the cell that provides basic coverage is referred to as the first base station, and the base station corresponding to the cell that provides hotspot coverage or is used for capacity improvement is referred to as the second base station. The terminal connected to the first base station periodically or aperiodically measures the serving cell that provides basic coverage for the terminal according to the matching of the network, and reports the measurement information or measurement results. The reported measurement information (results) at least includes beam-level measurement results, and may also include cell-level measurement results, terminal location information, etc.

The cell-level measurement results mainly refer to the measurement results of one or more cells under the same base station or different base stations. The measurement results of different cells may be distinguished by cell identifiers; the beam-level measurement results mainly refer to the measurement results of one or more beams included in the range of a neighboring cell, or the measurement results of one or more beams included in the range of multiple neighboring cells, such as the direction, the angle range, the corresponding coverage range of each beam, etc. Each beam may also be distinguished by a beam identifier, and the identifiers of beams between different cells are different. The same beam identifier may also be used between different cells. In this case, a cell identifier needs to be added to further distinguish beams belonging to different cells.

The above-mentioned first base station receives the measurement information reported from all terminals connected to the first cell corresponding to the first base station, and determines whether the currently carried service volume has exceeded the extreme value of the load of the first cell. In case that the first base station determines that the currently carried service volume has exceeded the extreme value of the load of the first cell and the load is heavy, some terminals connected to the first cell need to be handed over to the corresponding hotspot cell. In an embodiment, the handover may be performed by transmitting the first request message to the target cell. The target cell here refers to the information of one or more cells included in the measurement report information reported from the terminal, and these target cells are all hotspot cells. The above-mentioned first cell and the hotspot cell corresponding to the first cell mainly refer to that the coverage range where the first cell provides services includes the coverage ranges where all the hotspot cells corresponding to the first cell provide services, that is, the coverage ranges where all the hotspot cells corresponding to the first cell provide services are within the coverage range where the first cell provides services. The first cell here does not refer to a specific cell, but refers to a general term for all cells that meet the above characteristics.

The above-mentioned first request message includes at least one of the following:
first indication information, used to indicate one or more SSB beams requested to be activated;
second indication information, used to indicate the SSB beams to which locations of target terminals belong;
location information of target terminals;
a bandwidth part requested to be activated; or
to-be-offloaded service volume and service volume of each target terminal.

That is, the first request message transmitted from the first base station to the second base station corresponding to the target cell may include the first indication information, which directly indicates one or more SSB beams that need to be activated. Each beam corresponds to a beam identifier (ID). An angle pointed by each beam may be obtained through an antenna radiation pattern. Each beam ID may be uniquely mapped to an SSB ID or uniquely mapped to a channel state information reference signal identifier (CSI-RS ID). There may be multiple ways of unique mapping, which are not limited here.

**In** an embodiment, the first request message transmitted from the first base station to the second base station corresponding to the target cell may include the second indication information, which is used to indicate the SSB beam to which the locations of the target terminals belong. As such, the second base station may determine which SSB beams correspond to more target terminals after receiving the second indication information, and activate these SSB beams preferentially. The SSB beam may also be not activated when the number of target terminals corresponding to the SSB beam is small and the service volume of these target terminals is not large.

**In** an embodiment, the first request message transmitted from the first base station to the second base station corresponding to the target cell may include the location information of the target terminals. After receiving the first request message, the second base station determines the distribution of the above target terminals based on its own SSB beam configuration information, and determines whether to activate which SSB beam or SSB beams, or not to activate the SSB beam.

**In** an embodiment, the first request message transmitted from the first base station to the second base station corresponding to the target cell may include the bandwidth part requested to be activated. After receiving the first request message, the second base station determines whether to activate the bandwidth part in the target cell.

**In** an embodiment, the first request message transmitted from the first base station to the second base station corresponding to the target cell may include the to-be-offloaded service volume and the service volume of each target terminal. After receiving the first request message, the second base station determines which target terminals have a total service volume that meets the requirement for offloading, and then determines which target terminals need to be handed over to the target cell.

Similarly, the first request message may also include any combination of the above situations. The second base station receives the first request message and determines whether to activate a certain SSB beam(s) in the target cell, the bandwidth part of the target cell, or the bandwidth part in the SSB beam based on the actual network situation, the service requirements of the terminals, and the load of the first base station comprehensively. The first request message may be a cell activation request or other request messages.

In the method for activating partial resources of cell provided by the embodiments of the present application, by measuring and reporting SSB beam associated information by the terminal, in case that the base station determines that its load is heavy, the base station requests the neighboring base station to activate one or more SSB beams in the target cell belonging to the neighboring base station and/or requests to activate the bandwidth part under the neighboring base station, which avoids that the neighboring base station activates the entire target cell based on the request, and saves power consumption.

In an embodiment, before transmitting the first request message to the second base station to which the target cell belongs, the method includes:
determining the first request message based on measurement results reported from the target terminals and configuration information of the second base station, and/or service volume of the target terminals and carrying capacity of the first cell,
where the measurement results reported from the target terminals at least include measurement results for one or more SSB beams in the target cell, and the configuration information of the second base station at least includes a coverage area of each SSB beam corresponding to the target cell.

In an embodiment, before transmitting the first request message, the first base station needs to determine the specific content carried in the first request message. The specific determination mode includes:
all target terminals connected to the first cell report their measurement results to the first base station to which the first cell belongs; the first base station may also obtain the coverage area of each SSB beam corresponding to each target cell in the second base station from the second base station; the coverage area of the SSB beam here may be represented by the specific location coordinate information corresponding to its boundary; and the measurement information reported from the target terminals may include the location information of the target terminals. As such, the first base station may determine the SSB beam to which each target terminal belongs based on the location information of the target terminals and the coverage range of each SSB beam; or
all target terminals connected to the first cell report their measurement results to the first base station to which the first cell belongs; the first base station may obtain the service volume corresponding to each target terminal from the reported measurement results; the first base station has knowledge of the carrying capacity of the first cell, and may determine whether the service volume of all target terminals currently connected to the first cell exceeds the carrying capacity of the first cell; the first base station may further determine the total amount of the service volume of all target terminals and a difference between the total amount and the carrying capacity of the first cell, and determine the bandwidth to be activated in combination with the data transmission rate; the bandwidth here is generally a part of the full bandwidth of the target cell; or
a combination of the above two situations may be used to determine the bandwidth part to be activated in the SSB beam.

The above determination of the first request message transmitted from the first base station is only a schematic illustration. There are many specific modes, which are not listed here one by one. The first base station may directly determine the first indication information, the location information of the target terminals, the to-be-offloaded service volume, and the service volume of each target terminal included in the first request message. Therefore, the first request message transmitted from the first base station may dynamically select different parameters for reporting based on actual requirements to more flexibly determine one or more SSB beams that need to be activated and/or bandwidth part that needs to be activated based on the first request message.

In addition, the first request message transmitted from the first base station may be transmitted to the second base station directly through the Xn interface or indirectly through the NG interface. The Xn interface is the interface between the first base station and the second base station. In case that the second base station is a CU/DU split structure, the first request message transmitted from the first base station is transmitted to the control plane central unit of the second base station through the Xn-C interface. The central unit (CU) in the second base station communicates with the DU through the F1-C interface. In case that there is no Xn interface between the first base station and the second base station, the first base station may transmit the first request message to the corresponding AMF through the NG interface, and the AMF forwards the first request message to the second base station through the NG interface again. The response message corresponding to the first request message transmitted from the second base station is also forwarded through the AMF, and the corresponding interface is the NG interface.

In an embodiment, the method further includes:
obtaining an activated SSB beam and/or activated bandwidth in the target cell based on a received response message transmitted from the second base station,
where the response message transmitted from the second base station includes any or any combination of the activated SSB beam, an unactivated SSB beam or the activated bandwidth.

In an embodiment, after the first base station transmits the first request message, the second base station determines activating which SSB beam or SSB beams based on the first request message. For example, the first request message requests the activation of three SSB beams, including {SSB beam1, SSB beam2, SSB beam3}, the second base station determines that the number of terminals belonging to the coverage areas of these three SSB beams is N1, N2 and N3, respectively, N1>N2>N3, and the value of N3 is small, then the second base station may activate SSB beam1 and SSB beam2, and not activate SSB beam3.

The second base station may also determine which bandwidth part of the target cell needs to be activated based on the first request message. For example, the second base station determines, based on the service volume of the target terminals included in the first request message, that by activating the bandwidth part of the target cell, the service volume needs to be offloaded by the first cell may be completed through the activated bandwidth part.

In addition, the second base station may also determine the bandwidth part under a certain SSB beam or certain SSB beams based on the first request message, and hand over some terminals in the first cell to the corresponding SSB beam. As such, the overloaded service volume of the first base station is carried by part of the resources in the neighboring target cell, which avoids activating the resources of the entire target cell and causing waste of resources.

After determining the SSB beam that needs to be activated, the bandwidth part that needs to be activated, or the bandwidth part in the SSB beam that needs to be activated, the second base station transmits a response message corresponding to the first request message to the first base station. After receiving the response message, the first base station may learn which SSB beam or SSB beams in which target cell the second base station has activated, or which bandwidth part of which target cell the second base station has activated, or which bandwidth part in which SSB beam or SSB beams the second base station has activated.

In an embodiment, the method further includes:
determining the target terminals that need to be handed over to the target cell based on a coverage area corresponding to the activated SSB beam and the location information of the target terminals, and/or the activated bandwidth and the service volume of each target terminal.

In an embodiment, after receiving the response message transmitted from the second base station and learning which SSB beam or SSB beams in which target cell the second base station has activated, or which bandwidth part of which target cell the second base station has activated, or which bandwidth part of which SSB beam or SSB beams the second base station has activated, the first base station may determine which target terminal or terminals need to be handed over to the target cell based on the coverage information of each SSB beam and the location information of each target terminal; or, based on the activated bandwidth and the service volume of each target terminal, the first base station may determine that the target terminals are located in the range where the target cell of the activated bandwidth provides services and the sum of the corresponding service volumes is approximately equal to the activated bandwidth, which determines which target terminal or terminals need to be handed over to the target cell. Similarly, the combination of the above two modes may be used to determine the target terminals to be handed over to the target cell. For example, firstly some target terminals are selected based on the coverage range of the SSB beam, and then it is determined whether to activate the bandwidth part based on the service volume of the selected target terminals and the overall service volume of the SSB beam.

In an embodiment, the measurement results reported from the target terminals include beam-level measurement results and the location information of the target terminals, where the beam-level measurement results include measurement results of one or more SSB beams in a same target cell and measurement results of one or more SSB beams in different target cells.

In an embodiment, the measurement results reported from the target terminals may include the measurement results of one or more beams of the same target cell measured by the target terminals, and may also include the measurement results of one or more beams of different target cells. The above measurement results of the beam may include information such as the coverage range of the beam, the corresponding identifier, the cell to which it belongs, etc. In addition, the measurement results reported from the target terminals may also include the location information of the target terminals.

The beam-level measurement results reported from the target terminals may be used to determine the SSB beams to which the locations of the target terminals belong. The SSB beam to which the location of the target terminal belongs refers to that the location of the target terminal is within the coverage range of the SSB beam. The location information of the target terminal may be the geographical location coordinates of the terminal, which may be divided into an astronomical coordinate system, a geodetic coordinate system, and a geocentric coordinate system.

In an embodiment, the configuration information of the second base station includes configuration information of SSB beams corresponding to all target cells belonging to the second base station; and the configuration information of the SSB beam includes a coverage area corresponding to each SSB beam.

In an embodiment, before transmitting the first request message to the second base station, the first base station needs to combine the configuration information of the second base station to determine which information needs to be configured in the first request message. The configuration information of the second base station includes the configuration information of the SSB beams corresponding to all target cells belonging to the second base station. The configuration information of the SSB beam includes the coverage area corresponding to each SSB beam, and may also include the identifier of each SSB beam to distinguish different beams of different cells or different beams of the same cell. The configuration information of the second base station is pre-configured by operation and maintenance mechanism (OAM) or obtained from the second base station.

In the method for activating partial resources of cell provided by the embodiments of the present application, by measuring and reporting SSB beam associated information by the terminal, in case that the base station determines that its load is heavy, the base station requests the neighboring base station to activate one or more SSB beams in the target cell belonging to the neighboring base station and/or requests to activate the bandwidth part under the neighboring base station, which avoids that the neighboring base station activates the entire target cell based on the request, and saves power consumption.

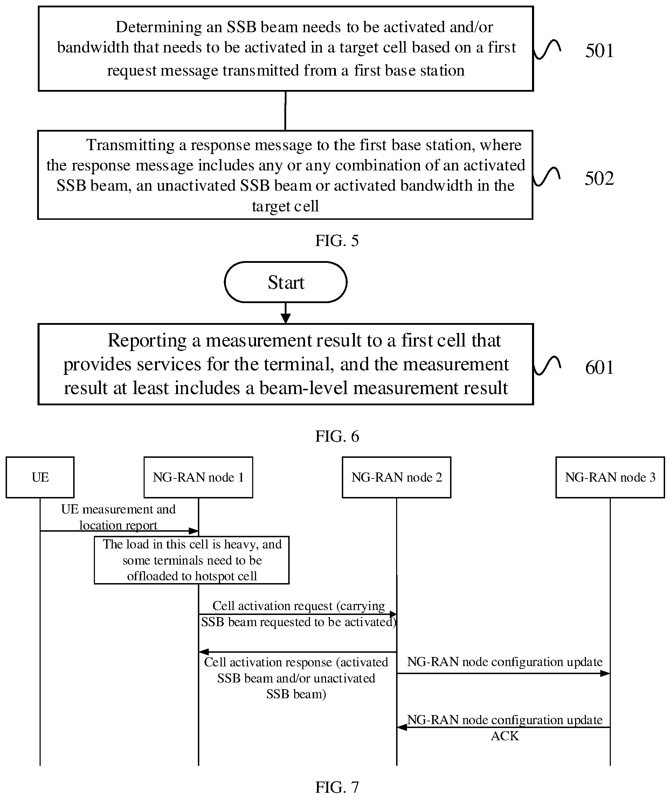

FIG. 5 is a second schematic flowchart of a method for activating partial resources of cell according to an embodiment of the present application. As shown in FIG. 5, the method is performed by a second base station, and includes the following steps.

Step 501: determining a synchronization signal and physical broadcast channel (PBCH) block (SSB) beam that needs to be activated and/or bandwidth that needs to be activated in a target cell based on a first request message transmitted from a first base station.

Step 502: transmitting a response message to the first base station, where the response message includes any or any combination of an activated SSB beam, an unactivated SSB beam or activated bandwidth in the target cell,
where the first base station is a base station to which all first cells providing services to target terminals belong, areas where the first cells provide services include areas where all the target cells provide services, and the target cells belong to the second base station.

In an embodiment, after the target terminals report the measurement results to the first base station that provides basic coverage for them, in case that the first base station determines that its own load is heavy, the first base station may transmit the first request message to the second base station to which one or more target cells included in the above-mentioned measurement results reported from the target terminals belong.

The second base station receives the first request message, and determines the SSB beam that needs to be activated in the target cell, the bandwidth that needs to be activated, or the bandwidth part in the SSB beam that needs to be activated based on the specific measurement results carried in the first request message; and depending on the different specific measurement results carried in the first request message, the second base station may also need to determine the SSB beam that needs to be activated in the target cell, the bandwidth that needs to be activated, or the bandwidth part in the SSB beam that needs to be activated in combination with the locations of the target terminals.

The first request message may include any or any combination of first indication information, second indication information, location information of the target terminals, bandwidth part requested to be activated, and a service volume that needs to be offloaded and a service volume of each target terminal. The first indication information is used to indicate the one or more SSB beams requested to be activated, and the second indication information is used to indicate the SSB beams to which the locations of the target terminals belong.

The second base station determines the specific parameters carried in the first request message based on the received first request message. For example, the first request message includes the first indication information, one or more SSB beams requested to be activated are determined, and it is combined that whether a certain number of target terminals are located within the coverage range of the SSB beam corresponding to the second base station, in case that there are only a few target terminals and the corresponding service volume is also small, the SSB beam may not be activated; otherwise, the corresponding SSB beam may be activated. The second base station may also directly determine which one or several SSB beams to be activated based on the first indication information.

In case that the first request message includes the second indication information, which is used to indicate the SSB beams to which the locations of the target terminals belong, the second base station may determine which SSB beams correspond to more target terminals after receiving the second indication information, and active these SSB beams preferentially. The SSB beam may also be not activated in case that the number of target terminals corresponding to the SSB beam is small and the service volume of these target terminals is not large.

In case that the first request message includes the location information of the target terminals, the second base station, based on its own SSB beam configuration information, determines the distribution of the above target terminals after receiving the first request message, and determines whether to activate which SSB beam or SSB beams, or not to activate which SSB beam or SSB beams.

In case that the first request message includes the bandwidth part requested to be activated, the second base station determines whether to activate the bandwidth part in the target cell after receiving the first request message.

In case that the first request message includes the to-be-offloaded service volume and the service volume of each target terminal, the second base station, after receiving the first request message, determines which target terminals have a total service volume that meets the requirement for offloading, and then determines which target terminals need to be handed over to the target cell.

Similarly, the first request message may also include any combination of the above situations. The second base station receives the first request message and determines whether to activate a certain SSB beam(s) in the target cell, the bandwidth part of the target cell, or the bandwidth part in the SSB beam based on the actual network situation, the service requirements of the terminals, and the load of the first base station comprehensively. Then, a corresponding response message is transmitted to the first base station, where the response message includes any or any combination of an activated SSB beam, an unactivated SSB beam, and an activated bandwidth in the target cell.

The first base station receives the response message and may obtain which SSB beam or SSB beams in which specific target cell in the neighboring cells are activated, or which bandwidth part in which target cell is activated, or which bandwidth part in which SSB beam or SSB beams is activated.

The first request message transmitted from the first base station may be transmitted to the second base station directly through the Xn interface or indirectly through the NG interface. The Xn interface is the interface between the first base station and the second base station. In case that the second base station is a CU/DU split structure, the first request message transmitted from the first base station is transmitted to the control plane central unit of the second base station through the Xn-C interface. The CU in the second base station communicates with the DU through the F1-C interface. In case that there is no Xn interface between the first base station and the second base station, the first base station may transmit the first request message to the corresponding AMF through the NG interface, and the AMF forwards the first request message to the second base station through the NG interface again. The response message corresponding to the first request message transmitted from the second base station is also forwarded through the AMF, and the corresponding interface is the NG interface.

In the method for activating partial resources of cell provided by the embodiments of the present application, by measuring and reporting SSB beam associated information by the terminal, in case that the base station determines that its load is heavy, the base station requests the neighboring base station to activate one or more SSB beams in the target cell belonging to the neighboring base station and/or requests to activate the bandwidth part under the neighboring base station, which avoids that the neighboring base station activates the entire target cell based on the request, and saves power consumption.

FIG. 6 is a third schematic flowchart of a method for activating partial resources of cell according to an embodiment of the present application. As shown in FIG. 6, the method is performed by a terminal, such as a mobile phone, etc. The method includes the following steps.

Step 601: reporting a measurement result to a first cell that provides services for the terminal, where the measurement result at least includes a beam-level measurement result, the beam-level measurement result includes measurement results of one or more SSB beams in a same target cell and measurement results of one or more SSB beams in different target cells; the first cell belongs to a first base station, the target cells belong to a second base station, and an area where the first cell provides services includes an area where the target cell provides services,
the beam-level measurement results of SSB beam are used, by the first base station, to determine the SSB beams and/or bandwidth that need to be activated in the target cell.

In an embodiment, in the related art, the terminal performs measurement reporting in a unit of cell. In the method for activating partial resources of cell provided by the present application, in order to save resources, when the terminal measures the cell, on the one hand, the terminal measures the neighboring cells and the current serving cell, and on the other hand, the terminal performs beam-level measurement on each neighboring cell. The beam-level measurement includes performing associated measurements on one or more SSB beams in one target cell, and performing associated measurements on one or more SSB beams in different target cells; for example, measuring the direction of the SSB beams, the coverage ranges of the SSB beams, etc. In addition, the terminal may also report its location information. After receiving the measurement result reported from the terminal, the first base station may indirectly determine the location information of the terminal based on the measurement results of multiple SSB beams in the measurement results, or directly estimate the location of the terminal based on the terminal location information included in the measurement result reported from the terminal, and determine the coverage range of which SSB beam of which cell the terminal is located in.

The first base station receives the measurement information reported from all terminals connected to the first cell corresponding to the first base station, and determines whether the currently carried service volume has exceeded the extreme value of the load of the first cell. In case that the first base station determines that the currently carried service volume has exceeded the extreme value of the load of the first cell and the load is heavy, some terminals connected to the first cell need to be handed over to the corresponding hotspot cell. In an embodiment, the handover may be performed by transmitting the first request message to the target cell. The target cell here refers to the information of one or more cells included in the measurement report information reported from the terminal, and these target cells are all hotspot cells. The above-mentioned first cell and the hotspot cell corresponding to the first cell mainly refer to that the coverage range where the first cell provides services includes the coverage ranges where all the hotspot cells corresponding to the first cell provide services, that is, the coverage ranges where all the hotspot cells corresponding to the first cell provide services are within the coverage range where the first cell provides services. The first cell here does not refer to a specific cell, but refers to a general term for all cells that meet the above characteristics.

In the method for activating partial resources of cell provided by the embodiments of the present application, by measuring and reporting SSB beam associated information by the terminal, in case that the base station determines that its load is heavy, the base station requests the neighboring base station to activate one or more SSB beams in the target cell belonging to the neighboring base station and/or requests to activate the bandwidth part under the neighboring base station, which avoids that the neighboring base station activates the entire target cell based on the request, and saves power consumption. The method for activating partial resources of cell provided by the present application is illustrated in the following with examples.

FIG. 7 is a first schematic implementation flowchart of a method for activating partial resources of cell according to an embodiment of the present application. As shown in FIG. 7, an area where the cell corresponding to NG-RAN node 1 provides services for a user equipment (UE) is a basic coverage area, and the area where the cell corresponding to NG-RAN node 2 provides services for UE is a hotspot coverage area. There is an Xn interface between the NG-RAN node 1 and the NG-RAN node 2. The first request message transmitted from the NG-RAN node 1 carries SSB beam 1 and SSB beam 2 in cell 1 corresponding to the NG-RAN node 2.

Step 1: UE reports measurement results (information) to the NG-RAN node 1 corresponding to the cell that provides services for the UE, which includes cell-level measurement results, beam-level measurement results, UE location information, etc.

Step 2: in case that the NG-RAN node 1 determines that its own load is heavy, NG-RAN node 1 prepares to offload the services of some UEs to the hotspot cell based on the measurement results reported from the UEs, that is, to hand over some UEs to the hotspot cell. The NG-RAN node 1 determines, based on the measurement results reported from the UEs connected to the NG-RAN node **1,** SSB beam 1 and SSB beam 2 of the cell 1 under NG-RAN node 2 to which the some UEs are to be handed over.

Step 3: the NG-RAN node 1 transmits a first request message, which may be a cell activation request, where the first request message carries a request to activate SSB beam 1 and SSB beam 2 under cell 1. The first request message may also carry measurement results reported from the UE, including cell-level measurement results and/or beam-level measurement results. The above-mentioned cell-level measurement results may be information such as the reference signal receiving power (RSRP), reference signal receiving quality (RSRQ) and physical cell identifier (PCI) corresponding to different cells; and the beam-level measurement results may be information such as the coverage area corresponding to different beams in the same cell, and the coverage area corresponding to different beams in different cells.

Step 4: the NG-RAN node 2 determines whether to activate one or more SSB beams based on the content carried in the above-mentioned first request message, as well as its own network conditions, terminal requirements and other information, and transmits the activation results to the NG-RAN node 1 by transmitting a response message, which includes activated beams and unactivated beams.

Step 5: the NG-RAN node 2 transmits the status update of the SSB beams of the cells under NG-RAN node 2 to other base stations (NG-RAN node 3), which may include the statuses of the SSB beams, coverage information, etc. The other base stations here are all corresponding hotspot cells, and the coverage ranges of these hotspot cells are within the coverage range of the corresponding cells of NG-RAN node 1. The cells corresponding to the NG-RAN node 1 provide basic coverage for the UEs connected to it.

On the basis of the above embodiment, in case that the NG-RAN node 2 is a CU/DU split architecture, then in step 4, the CU of NG-RAN node 2 receives the first request message transmitted from the NG-RAN node 1 through the Xn-C interface, and the CU and DU inside the NG-RAN node 2 communicate with each other through the F1 interface. After receiving the first request message, the CU of the NG-RAN node 2 transmits it to the DU. The DU determines the activated one or more SSB beams, the unactivated SSB beams and the associated reasons, and transmits them to the CU of the NG-RAN node 2.

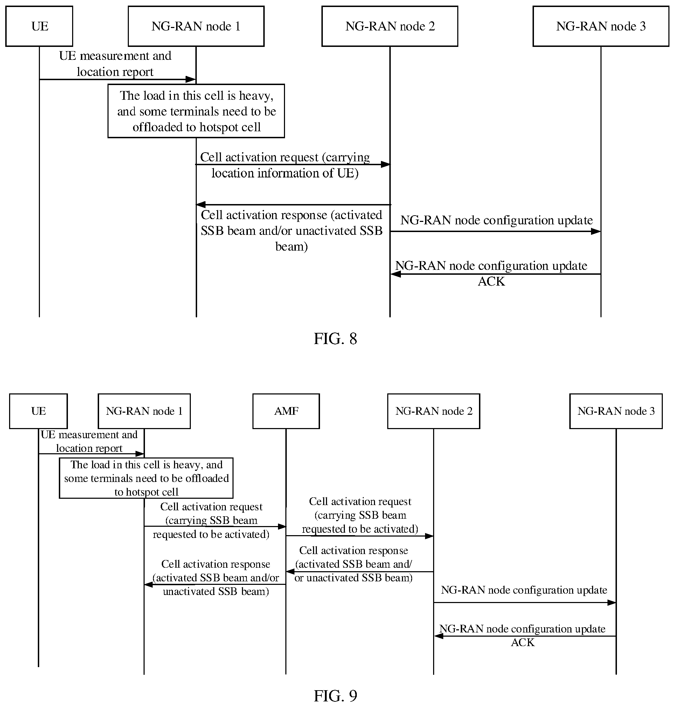

FIG. 8 is a second schematic implementation flowchart of a method for activating partial resources of cell according to an embodiment of the present application. As shown in FIG. 8, an area where the cell corresponding to NG-RAN node 1 provides services for UE is a basic coverage area, and the area where the cell corresponding to NG-RAN node 2 provides services for UE is a hotspot coverage area. There is an Xn interface between the NG-RAN node 1 and the NG-RAN node 2. The NG-RAN node 1 provides the NG-RAN node 2 with the location information of the UEs connected to the cell corresponding to the NG-RAN node 1.

Step 1: UE reports measurement results (information) to the NG-RAN node 1 corresponding to the cell that provides services for the UE, which includes cell-level measurement results, beam-level measurement results, UE location information, etc.

Step 2: in case that the NG-RAN node 1 determines that its own load is heavy, NG-RAN node 1 prepares to offload the services of some UEs to the hotspot cell based on the measurement results reported from the UEs, that is, to hand over some UEs to the hotspot cell. The NG-RAN node 1 determines, based on the measurement results reported from the UEs connected to the NG-RAN node 1, that the some UEs that are to be handed over are in SSB beam 1 and SSB beam 2 of the cell 1 under NG-RAN node 2.

Step 3: the NG-RAN node 1 transmits a first request message, which may be a cell activation request, and the first request message carries the location information of the UE. The location information may be the SSB beam to which the UE belongs, or the geographic location information of the UE, which may be expressed as latitude and longitude information, or coordinate information, etc.

Step 4: the NG-RAN node 2 determines whether to activate one or more SSB beams based on the content carried in the above-mentioned first request message, as well as its own network conditions, terminal requirements and other information, and transmits the activation results to the NG-RAN node 1 by transmitting a response message, which includes activated beams and unactivated beams.

Step 5: the NG-RAN node 2 transmits the status update of the SSB beams of the cells under NG-RAN node 2 to other base stations, which may include the statuses of the SSB beams, coverage information, etc. The other base stations here are all corresponding hotspot cells, and the coverage ranges of these hotspot cells are within the coverage range of the corresponding cells of NG-RAN node 1. The cells corresponding to the NG-RAN node 1 provide basic coverage for the UEs connected to it.

On the basis of the above embodiment, in case that the NG-RAN node 2 is a CU/DU split architecture, then in step 4, the CU of NG-RAN node 2 receives the first request message transmitted from the NG-RAN node 1 through the Xn-C interface, and the CU and DU inside the NG-RAN node 2 communicate with each other through the F1 interface. After receiving the first request message, the CU of the NG-RAN node 2 transmits it to the DU. The DU determines the activated one or more SSB beams, the unactivated SSB beams and the associated reasons, and transmits them to the CU of the NG-RAN node 2.

FIG. 9 is a third schematic implementation flowchart of a method for activating partial resources of cell according to an embodiment of the present application. As shown in FIG. 9, an area where the cell corresponding to NG-RAN node 1 provides services for UE is a basic coverage area, and the area where the cell corresponding to NG-RAN node 2 provides services for UE is a hotspot coverage area. There is an Xn interface between the NG-RAN node 1 and the NG-RAN node 2. The first request message transmitted from the NG-RAN node 1 carries SSB beam 1 and SSB beam 2 in cell 1 corresponding to the NG-RAN node 2.

Step 1: UE reports measurement results (information) to the NG-RAN node 1 corresponding to the cell that provides services for the UE, which includes cell-level measurement results, beam-level measurement results, UE location information, etc.

Step 2: in case that the NG-RAN node 1 determines that its own load is heavy, NG-RAN node 1 prepares to offload the services of some UEs to the hotspot cell based on the measurement results reported from the UEs, that is, to hand over some UEs to the hotspot cell. The NG-RAN node 1 determines, based on the measurement results reported from the UEs connected to the NG-RAN node 1, that the some UEs that are to be handed over are in SSB beam 1 and SSB beam 2 of the cell 1 under NG-RAN node 2.

Step 3: the NG-RAN node 1 transmits a first request message to AMF through the NG interface, and the AMF forwards the first request message to the NG-RAN node 2 through the NG interface again; the first request message may be a cell activation request, and the first request message carries a request to activate SSB beam1 and SSB beam 2 under the cell 1. The first request message may also carry the measurement results reported from the UE, including cell-level measurement results and/or beam-level measurement results. The above-mentioned cell-level measurement results may be information such as the RSRP, the RSRQ and the PCI corresponding to different cells; and the beam-level measurement results may be information such as the coverage area corresponding to different beams in the same cell and the coverage area corresponding to different beams in different cells.

Step 4: the NG-RAN node 2 determines whether to activate one or more SSB beams based on the content carried in the above-mentioned first request message, as well as its own network conditions, terminal requirements and other information, and transmits the activation results to the NG-RAN node 1 by transmitting a response message, which includes activated beams and unactivated beams.

Step 5: the NG-RAN node 2 transmits the status update of the SSB beams of the cells under NG-RAN node 2 to other base stations (NG-RAN node 3), which may include the statuses of the SSB beams, coverage information, etc. The other base stations here are all corresponding hotspot cells, and the coverage ranges of these hotspot cells are within the coverage range of the corresponding cells of NG-RAN node 1. The cells corresponding to the NG-RAN node 1 provide basic coverage for the UEs connected to it.

On the basis of the above embodiment, in case that the NG-RAN node 2 is a CU/DU split architecture, then in step 4, the CU of the NG-RAN node 2 receives the first request message forwarded by the AMF, and the CU and DU inside NG-RAN node2 communicate with each other through the F1 interface. After receiving the first request message, the CU of the NG-RAN node 2 transmits it to the DU. The DU determines the activated one or more SSB beams, the unactivated SSB beams and the associated reasons, and transmits them to the CU of NG-RAN node 2.

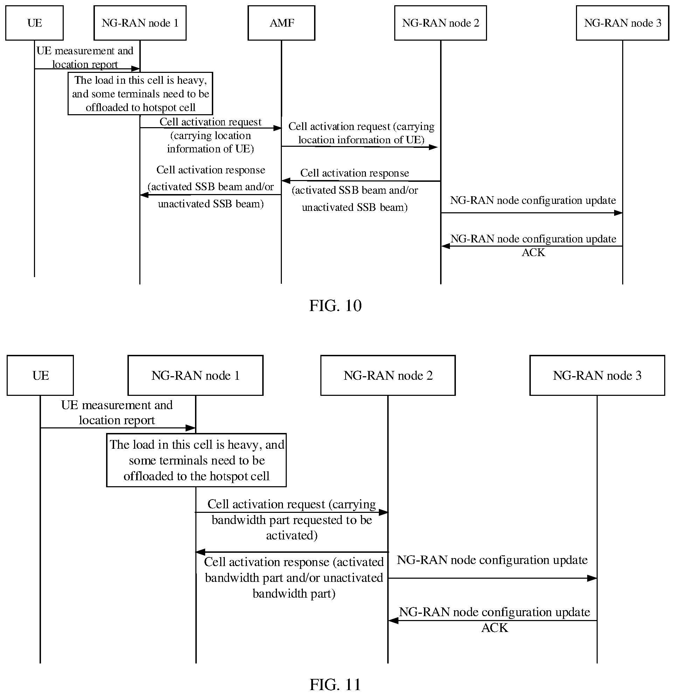

FIG. 10 is a fourth schematic implementation flowchart of a method for activating partial resources of cell according to an embodiment of the present application. As shown in FIG. 10, an area where the cell corresponding to NG-RAN node 1 provides services for UE is a basic coverage area, and the area where the cell corresponding to NG-RAN node 2 provides services for UE is a hotspot coverage area. There is no Xn interface between the NG-RAN node 1 and the NG-RAN node 2. The NG-RAN node 1 provides NG-RAN node 2 with the location information of UEs connected to the cell corresponding to the NG-RAN node 1.

Step 1: UE reports measurement results (information) to the NG-RAN node 1 corresponding to the cell that provides services for the UE, which includes cell-level measurement results, beam-level measurement results, UE location information, etc.

Step 2: in case that the NG-RAN node 1 determines that its own load is heavy, NG-RAN node 1 prepares to offload the services of some UEs to the hotspot cell based on the measurement results reported from the UEs, that is, to hand over some UEs to the hotspot cell. The NG-RAN node 1 determines, based on the measurement results reported from the UEs connected to the NG-RAN node 1, that the some UEs that are to be handed over are in SSB beam 1 and SSB beam 2 of the cell 1 under NG-RAN node 2.

Step 3: the NG-RAN node 1 transmits a first request message to AMF through the NG interface, and the AMF forwards the first request message to the NG-RAN node 2 through the NG interface again; the first request message may be a cell activation request, which carries the location information of the UE. The location information may be the SSB beam to which the UE belongs, or the geographical location information of the UE, which may be expressed as latitude and longitude information, or coordinate information, etc.

Step 4: the NG-RAN node 2 determines whether to activate one or more SSB beams based on the content carried in the above-mentioned first request message, as well as its own network conditions, terminal requirements and other information, and transmits the activation results to the NG-RAN node 1 by transmitting a response message, which includes activated beams and unactivated beams.

Step 5: the NG-RAN node 2 transmits the status update of the SSB beams of the cells under NG-RAN node 2 to other base stations, which may include the statuses of the SSB beams, coverage information, etc. The other base stations here are all corresponding hotspot cells, and the coverage ranges of these hotspot cells are within the coverage range of the corresponding cells of NG-RAN node 1. The cells corresponding to the NG-RAN node 1 provide basic coverage for the UEs connected to it.

On the basis of the above embodiment, in case that the NG-RAN node 2 is a CU/DU split architecture, then in step 4, the CU of the NG-RAN node 2 receives the first request message forwarded by the AMF, and the CU and DU inside NG-RAN node 2 communicate with each other through the F1 interface. After receiving the first request message, the CU of the NG-RAN node 2 transmits it to the DU. The DU determines the activated one or more SSB beams, the unactivated SSB beams and the associated reasons, and transmits them to the CU of NG-RAN node 2.

FIG. 11 is a fifth schematic implementation flowchart of a method for activating partial resources of cell according to an embodiment of the present application. As shown in FIG. 11, an area where the cell corresponding to NG-RAN node 1 provides services for UE is a basic coverage area, and the area where the cell corresponding to NG-RAN node 2 provides services for UE is a hotspot coverage area. There is an Xn interface between the NG-RAN node 1 and the NG-RAN node 2. The first request message transmitted from the NG-RAN node1 carries information requesting the NG-RAN node 2 to activate the bandwidth part.

Step 1: UE reports measurement results (information) to the NG-RAN node 1 corresponding to the cell that provides services for the UE, which includes cell-level measurement results, beam-level measurement results, UE location information, etc.

Step 2: in case that the NG-RAN node 1 determines that its own load is heavy, NG-RAN node 1 prepares to offload the services of some UEs to the hotspot cell based on the measurement results reported from the UEs, that is, to hand over some UEs to the hotspot cell. The NG-RAN node1 determines, based on the measurement results reported from the UEs connected to the NG-RAN node 1, that only a bandwidth part under NG-RAN node 2 needs to be activated to provide services for the some UEs that need to be offloaded.

Step 3: The NG-RAN node 1 transmits a first request message, which may be a cell activation request, and the first request message carries the number of UEs that need to be offloaded and/or the service volume that needs to be offloaded and/or the bandwidth part requested to be activated; the number of the above UEs may be determined based on the service volume of each UE and the to-be-offloaded service volume; the above to-be-offloaded service volume may be determined based on the difference between the extreme value of the carrying capacity of the NG-RAN node 1 and the service volume of all terminals connected to the NG-RAN node 1; and the above-mentioned bandwidth part requested to be activated may be determined based on the to-be-offloaded service volume or the service volume of each terminal and the service information of the terminal.

Step 4: the NG-RAN node 2 determines whether to activate the corresponding bandwidth part based on the content carried in the above-mentioned first request message, its own network conditions, terminal requirements and other information, and transmits the activation results to the NG-RAN node 1 by transmitting a response message, which includes information of the activated bandwidth part and/or information of the unactivated bandwidth part.

Step 5: the NG-RAN node 2 transmits the status update of the SSB beams of the cells under NG-RAN node 2 to other base stations (NG-RAN node 3), which may include the statuses of the SSB beams, coverage information, etc. The other base stations here are all corresponding hotspot cells, and the coverage ranges of these hotspot cells are within the coverage range of the corresponding cells of NG-RAN node 1. The cells corresponding to the NG-RAN node 1 provide basic coverage for the UEs connected to it.

It should be noted that the content carried in the first request message in the method for activating partial resources of cell listed in each embodiment of the present application is only exemplary, not exhaustive, and does not constitute a limitation on the method for determining the activated partial resources of cell for a terminal in each embodiment of the present application.

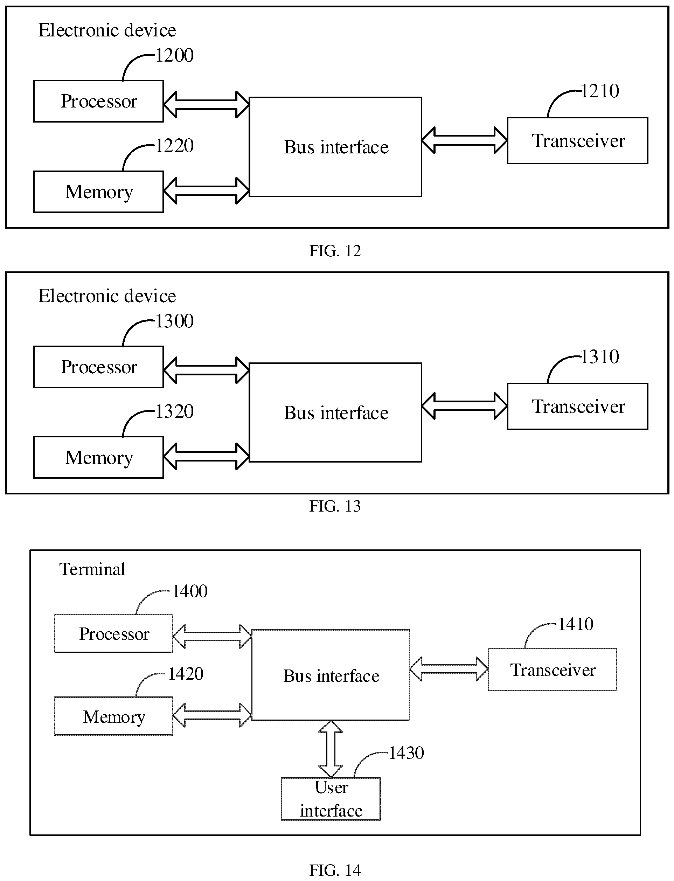

FIG. 12 is a first schematic structural diagram of a first base station device according to an embodiment of the present application. As shown in FIG. 12, the first base station device includes a memory 1220, a transceiver 1210 and a processor 1200, where the processor 1200 and memory 1220 may be physically arranged separately.

The memory 1220 is used for storing a computer program; the transceiver 1210 is used for transmitting and receiving data under control of the processor 1200; and the processor 1200 is used for reading the computer program stored in the memory 1220 and performing the following operations:
transmitting a first request message to a second base station to which a target cell belongs, where the first request message is used, by the second base station, to determine a synchronization signal and physical broadcast channel (PBCH) block (SSB) beam that needs to be activated and/or bandwidth that needs to be activated in the target cell,
where the first request message includes at least one of the following:
   first indication information, used to indicate one or more SSB beams requested to be activated;
   second indication information, used to indicate SSB beams to which locations of target terminals belong;
   location information of target terminals;
   a bandwidth part requested to be activated; or
   to-be-offloaded service volume and service volume of each target terminal; and
   an area where the target cell provides services is within a range of an area where a first cell provides services, the first cell belongs to the first base station, and the target terminals are terminals connected to the first cell.

In an embodiment, the transceiver 1210 is used for receiving and transmitting data under control of the processor 1200.

In FIG. 12, a bus architecture may include any number of interconnected buses and bridges, which are linked together through various circuits of one or more processors represented by the processor 1200 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1210 may include multiple elements, i.e., including a transmitter and a receiver, units for providing communication with various other devices over transmission media including wireless channels, wired channels, fiber optic cables, and the like.

The processor 1200 is responsible for managing the bus architecture and general processing, and the memory 1220 may store data used by the processor 1200 when performing operations.

The processor 1200 may be a central processing unit (CPU), an application specific integrated circuit (ASIC), a field-programmable gate array (FPGA), or a complex programmable logic device (CPLD), the processor may also use a multi-core architecture.

The processor 1200 calls the computer program stored in the memory 1220 to execute any of the methods performed by the first base station provided by the embodiments of the present application in accordance with the obtained executable instructions. The processor and the memory may be physically arranged separately.

In an embodiment, before transmitting the first request message to the second base station to which the target cell belongs, the operations include:
determining the first request message based on measurement results reported from the target terminals and configuration information of the second base station, and/or service volume of the target terminals and carrying capacity of the first cell,
where the measurement results reported from the target terminals at least include measurement results for one or more SSB beams in the target cell, and the configuration information of the second base station at least includes a coverage area of each SSB beam corresponding to the target cell.

In an embodiment, the operations further include:
obtaining an activated SSB beam and/or activated bandwidth in the target cell based on a received response message transmitted from the second base station,
where the response message transmitted from the second base station includes any or any combination of the activated SSB beam, an unactivated SSB beam or the activated bandwidth.

In an embodiment, the operations further include:
determining the target terminals that need to be handed over to the target cell based on a coverage area corresponding to the activated SSB beam and the location information of the target terminals, and/or the activated bandwidth and the service volume of each target terminal.

In an embodiment, the measurement results reported from the target terminals include beam-level measurement results and the location information of the target terminals, where the beam-level measurement results include measurement results of one or more SSB beams in a same target cell and measurement results of one or more SSB beams in different target cells.

In an embodiment, the configuration information of the second base station includes configuration information of SSB beam corresponding to all target cells belong to the second base station; and the configuration information of the SSB beam includes a coverage area corresponding to each SSB beam.

FIG. 13 is a second schematic structural diagram of a second base station device according to an embodiment of the present application. As shown in FIG. 13, the second base station includes a memory 1320, a transceiver 1310 and a processor 1300, where the processor 1300 and memory 1320 may be physically arranged separately.

The memory 1320 is used for storing a computer program; the transceiver 1310 is used for transmitting and receiving data under control of the processor 1300; and the processor 1300 is used for reading the computer program stored in the memory 1320 and performing the following operations:
determining a synchronization signal and physical broadcast channel (PBCH) block (SSB) beam that needs to be activated and/or bandwidth that needs to be activated in a target cell based on a first request message transmitted from a first base station; and
transmitting a response message to the first base station, where the response message includes any or any combination of an activated SSB beam, an unactivated SSB beam or activated bandwidth in the target cell,
where the first base station is a base station to which all first cells providing services to target terminals belong, areas where the first cells provide services include areas where all the target cells provide services, and the target cells belong to the second base station.

In an embodiment, the transceiver 1310 is used for receiving and transmitting data under control of the processor 1300.

In FIG. 13, a bus architecture may include any number of interconnected buses and bridges, which are linked together through various circuits of one or more processors represented by the processor 1300 and one or more memories represented by the memory 1320. The bus architecture may also link together various other circuits, such as peripherals, voltage regulators, and power management circuits, etc., which are well known in the art, and therefore are not further described in the present application. The bus interface provides an interface. The transceiver 1310 may include multiple elements, i.e., including a transmitter and a receiver, units for providing communication with various other devices over transmission media including wireless channels, wired channels, fiber optic cables, and the like.

The processor 1300 is responsible for managing the bus architecture and general processing, and the memory 1320 may store data used by the processor 1300 when performing operations.

The processor 1300 may be a central processing unit (CPU), an application specific integrated circuit (ASIC), a field-programmable gate array (FPGA), or a complex programmable logic device (CPLD), the processor may also use a multi-core architecture.

FIG. 14 is a schematic structural diagram of a terminal device according to an embodiment of the present application. As shown in FIG. 14, the terminal includes a memory 1420, a transceiver 1410 and a processor 1400, where the processor 1400 and memory 1420 may be physically arranged separately.

The memory 1420 is used for storing a computer program; the transceiver 1410 is used for transmitting and receiving data under control of the processor 1400; and the processor 1400 is used for reading the computer program stored in the memory 1420 and performing the following operations:
reporting a measurement result to a first cell that provides services for the terminal, where the measurement result at least includes a beam-level measurement result, the beam-level measurement result includes measurement results of one or more SSB beams in a same target cell and measurement results of one or more SSB beams in different target cells; the first cell belongs to a first base station, the target cells belong to a second base station, and an area where the first cell provides services includes an area where the target cell provides services; and
the beam-level measurement results of SSB beam are used, by the first base station, to determine SSB beams and/or bandwidth that need to be activated in the target cell.

In an embodiment, the transceiver 1410 is used for receiving and transmitting data under control of the processor 1400.

In FIG. 14, a bus architecture may include any number of interconnected buses and bridges, which are linked together through various circuits of one or more processors represented by the processor 1400 and one or more memories represented by the memory 1420. The bus architecture may also link together various other circuits, such as peripherals, voltage regulators, and power management circuits, etc., which are well known in the art, and therefore are not further described in the present application. The bus interface provides an interface. The transceiver 1410 may include multiple elements, i.e., including a transmitter and a receiver, units for providing communication with various other devices over transmission media including wireless channels, wired channels, fiber optic cables, and the like. For different user equipment, a user interface 1430 may be an interface capable of externally or internally connecting the required equipment, and the connected equipment includes, but not limited to, a small keypad, a display, a speaker, a microphone, a joystick, and the like.

The processor 1400 is responsible for managing the bus architecture and general processing, and the memory 1420 may store data used by the processor 1400 when performing operations.

The processor 1400 may be a central processing unit (CPU), an application specific integrated circuit (ASIC), a field-programmable gate array (FPGA), or a complex programmable logic device (CPLD), the processor may also use a multi-core architecture.

The processor 1400 calls the computer program stored in the memory 1420 to execute any of the methods performed by the terminal provided by the embodiments of the present application in accordance with the obtained executable instructions. The processor 1400 and the memory 1420 may be physically arranged separately.

It should be noted here that the above electronic devices provided by the embodiments of the present application may implement all the method steps implemented by the above method embodiments performed by the first base station, or the second base station, or the terminal, and may achieve the same effect. The same parts and beneficial effects as the same method embodiments are not repeated in the present application.

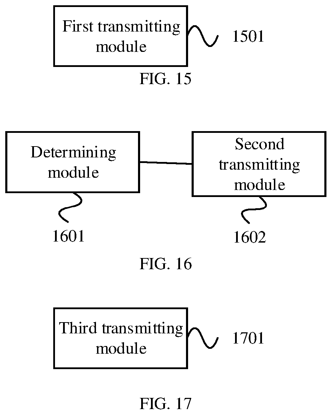

FIG. 15 is a first schematic structural diagram of an apparatus for activating partial resources of cell according to an embodiment of the present application. The apparatus may be for use in a first base station. As shown in FIG. 15, the apparatus includes:
a first transmitting module 1501, used for transmitting a first request message to a second base station to which a target cell belongs, where the first request message is used, by the second base station, to determine a synchronization signal and physical broadcast channel (PBCH) block (SSB) beam that needs to be activated and/or bandwidth that needs to be activated in the target cell,
where the first request message includes at least one of the following:
   first indication information, used to indicate one or more SSB beams requested to be activated;
   second indication information, used to indicate SSB beams to which locations of target terminals belong;
   location information of target terminals;
   a bandwidth part requested to be activated; or
   to-be-offloaded service volume and service volume of each target terminal; and
   an area where the target cell provides services is within a range of an area where a first cell provides services, the first cell belongs to the first base station, and the target terminals are terminals connected to the first cell.

In an embodiment, before transmitting the first request message to the second base station to which the target cell belongs, the first transmitting module 1501 is further used for:
determining the first request message based on measurement results reported from the target terminals and configuration information of the second base station, and/or service volume of the target terminals and carrying capacity of the first cell,
where the measurement results reported from the target terminals at least include measurement results for one or more SSB beams in the target cell, and the configuration information of the second base station at least includes a coverage area of each SSB beam corresponding to the target cell.

In an embodiment, the apparatus further includes an obtaining module 1502, which is used for:
obtaining an activated SSB beam and/or activated bandwidth in the target cell based on a received response message transmitted from the second base station,
where the response message transmitted from the second base station includes any or any combination of the activated SSB beam, an unactivated SSB beam or the activated bandwidth.

In an embodiment, the apparatus further includes a first determining module 1503, which is used for:
determining the target terminals that need to be handed over to the target cell based on a coverage area corresponding to the activated SSB beam and the location information of the target terminals, and/or the activated bandwidth and the service volume of each target terminal.

In an embodiment, the measurement results reported from the target terminals include beam-level measurement results and the location information of the target terminals, where the beam-level measurement results include measurement results of one or more SSB beams in a same target cell and measurement results of one or more SSB beams in different target cells.

In an embodiment, the configuration information of the second base station includes configuration information of SSB beam corresponding to all target cells belong to the second base station; and the configuration information of the SSB beam includes a coverage area corresponding to each SSB beam.

FIG. 16 is a second schematic structural diagram of an apparatus for activating partial resources of cell according to an embodiment of the present application. The apparatus may be for use in a second base station. As shown in FIG. 16, the apparatus includes:
a determining module 1601, used for determining a synchronization signal and physical broadcast channel (PBCH) block (SSB) beam that needs to be activated and/or bandwidth that needs to be activated in a target cell based on a first request message transmitted from a first base station; and
a second transmitting module 1602, used for transmitting a response message to the first base station, where the response message includes any or any combination of an activated SSB beam, an unactivated SSB beam or activated bandwidth in the target cell,
where the first base station is a base station to which all first cells providing services to target terminals belong, areas where the first cells provide services include areas where all the target cells provide services, and the target cells belong to the second base station.

FIG. 17 is a third schematic structural diagram of an apparatus for activating partial resources of cell according to an embodiment of the present application. The apparatus may be for use in a terminal. As shown in FIG. 17, the apparatus includes:
a third transmitting module 1701, used for reporting a measurement result to a first cell that provides services for the terminal, where the measurement result at least includes a beam-level measurement result, the beam-level measurement result includes measurement results of one or more SSB beams in a same target cell and measurement results of one or more SSB beams in different target cells; the first cell belongs to a first base station, the target cells belong to a second base station, and an area where the first cell provides services includes an area where the target cell provides services; and
the beam-level measurement results of SSB beam are used, by the first base station, to determine SSB beams and/or bandwidth that need to be activated in the target cell.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a computer readable storage medium storing a computer program that cause a computer to perform the steps of any of the methods for activating partial resources of cell provided by the above embodiments.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for activating partial resources of cell, performed by a first base station, comprising:
transmitting a first request message to a second base station to which a target cell belongs, wherein the first request message is used, by the second base station, to determine a synchronization signal and physical broadcast channel, PBCH, block, SSB, beam that needs to be activated and/or bandwidth that needs to be activated in the target cell,
wherein the first request message comprises at least one of the following:
first indication information, used to indicate one or more SSB beams requested to be activated;
second indication information, used to indicate SSB beams to which locations of target terminals belong;
location information of target terminals;
a bandwidth part requested to be activated; or
to-be-offloaded service volume and service volume of each target terminal; and
an area where the target cell provides services is within a range of an area where a first cell provides services, the first cell belongs to the first base station, and the target terminals are terminals connected to the first cell.

2. The method of claim 1, wherein before transmitting the first request message to the second base station to which the target cell belongs, the method comprises:
determining the first request message based on measurement results reported from the target terminals and configuration information of the second base station, and/or service volume of the target terminals and carrying capacity of the first cell,
wherein the measurement results reported from the target terminals at least comprise measurement results for one or more SSB beams in the target cell, and the configuration information of the second base station at least comprises a coverage area of each SSB beam corresponding to the target cell.

3. The method of claim **1,** further comprising:
obtaining an activated SSB beam and/or activated bandwidth in the target cell based on a received response message transmitted from the second base station,
wherein the response message transmitted from the second base station comprises any or any combination of the activated SSB beam, an unactivated SSB beam or the activated bandwidth.

4. The method of claim 3, further comprising:
determining the target terminals that need to be handed over to the target cell based on a coverage area corresponding to the activated SSB beam and the location information of the target terminals, and/or the activated bandwidth and the service volume of each target terminal.

5. The method of claim 2, wherein the measurement results reported from the target terminals comprise beam-level measurement results and the location information of the target terminals, wherein the beam-level measurement results comprise measurement results of one or more SSB beams in a same target cell and measurement results of one or more SSB beams in different target cells.

6. The method of claim 2, wherein the configuration information of the second base station comprises configuration information of SSB beam corresponding to all target cells belong to the second base station; and the configuration information of the SSB beam comprises a coverage area corresponding to each SSB beam.

7. A method for activating partial resources of cell, performed by a second base station, comprising:
determining a synchronization signal and physical broadcast channel, PBCH, block, SSB, beam that needs to be activated and/or bandwidth that needs to be activated in a target cell based on a first request message transmitted from a first base station; and
transmitting a response message to the first base station, wherein the response message comprises any or any combination of an activated SSB beam, an unactivated SSB beam or activated bandwidth in the target cell,
wherein the first base station is a base station to which all first cells providing services to target terminals belong, and areas where the first cells provide services comprise areas where all the target cells provide services, and the target cells belong to the second base station.

8. A method for activating partial resources of cell, performed by a terminal, comprising:
reporting a measurement result to a first cell that provides services for the terminal, wherein the measurement result at least comprises a beam-level measurement result, the beam-level measurement result comprises measurement results of one or more SSB beams in a same target cell and measurement results of one or more SSB beams in different target cells; the first cell belongs to a first base station, the target cells belong to a second base station, and an area where the first cell provides services comprises an area where the target cell provides services; and
the beam-level measurement results of SSB beam are used, by the first base station, to determine SSB beams and/or bandwidth that need to be activated in the target cell.

9. A first base station electronic device, comprising a memory, a transceiver and a processor, wherein the memory is used for storing a computer program, the transceiver is used for transmitting and receiving data under control of the processor, and the processor is used for executing the computer program in the memory and performing the following operations:
transmitting a first request message to a second base station to which a target cell belongs, wherein the first request message is used, by the second base station, to determine a synchronization signal and physical broadcast channel, PBCH, block, SSB, beam that needs to be activated and/or bandwidth that needs to be activated in the target cell,
wherein the first request message comprises at least one of the following:
first indication information, used to indicate one or more SSB beams requested to be activated;
second indication information, used to indicate SSB beams to which locations of target terminals belong;
location information of target terminals;
a bandwidth part requested to be activated; or
to-be-offloaded service volume and service volume of each target terminal; and
an area where the target cell provides services is within a range of an area where a first cell provides services, the first cell belongs to the first base station, and the target terminals are terminals connected to the first cell.

10. The first base station electronic device of claim 9, wherein before transmitting the first request message to the second base station to which the target cell belongs, the operations comprise:
determining the first request message based on measurement results reported from the target terminals and configuration information of the second base station, and/or service volume of the target terminals and carrying capacity of the first cell,
wherein the measurement results reported from the target terminals at least comprise measurement results for one or more SSB beams in the target cell, and the configuration information of the second base station at least comprises a coverage area of each SSB beam corresponding to the target cell.

11. The first base station electronic device of claim 9, wherein the operations further comprise:
obtaining an activated SSB beam and/or activated bandwidth in the target cell based on a received response message transmitted from the second base station,
wherein the response message transmitted from the second base station comprises any or any combination of the activated SSB beam, an unactivated SSB beam or the activated bandwidth.

12. The first base station electronic device of claim 11, wherein the operations further comprise:
determining the target terminals that need to be handed over to the target cell based on a coverage area corresponding to the activated SSB beam and the location information of the target terminals, and/or the activated bandwidth and the service volume of each target terminal.

13. The first base station electronic device of claim 10, wherein the measurement results reported from the target terminals comprise beam-level measurement results and the location information of the target terminals, wherein the beam-level measurement results comprise measurement results of one or more SSB beams in a same target cell and measurement results of one or more SSB beams in different target cells.

14. The first base station electronic device of claim 10, wherein the configuration information of the second base station comprises configuration information of SSB beam corresponding to all target cells belong to the second base station; and the configuration information of the SSB beam comprises a coverage area corresponding to each SSB beam.

15. A second base station electronic device, comprising a memory, a transceiver and a processor,
wherein the memory is used for storing a computer program, the transceiver is used for transmitting and receiving data under control of the processor, and the processor is used for executing the computer program in the memory and performing the following operations:
determining a synchronization signal and physical broadcast channel, PBCH, block, SSB, beam that needs to be activated and/or bandwidth that needs to be activated in a target cell based on a first request message transmitted from a first base station; and
transmitting a response message to the first base station, wherein the response message comprises any or any combination of an activated SSB beam, an unactivated SSB beam or activated bandwidth in the target cell,
wherein the first base station is a base station to which all first cells providing services to target terminals belong, and areas where the first cells provide services comprise areas where all the target cells provide services, and the target cells belong to the second base station.

16. A terminal electronic device, comprising a memory, a transceiver and a processor, wherein the memory is used for storing a computer program, the transceiver is used for transmitting and receiving data under control of the processor, and the processor is used for executing the computer program in the memory and performing the following operations:
reporting a measurement result to a first cell that provides services for the terminal, wherein the measurement result at least comprises a beam-level measurement result, the beam-level measurement result comprises measurement results of one or more SSB beams in a same target cell and measurement results of one or more SSB beams in different target cells; the first cell belongs to a first base station, the target cells belong to a second base station, and an area where the first cell provides services comprises an area where the target cell provides services; and
the beam-level measurement results of SSB beam are used, by the first base station, to determine SSB beams and/or bandwidth that need to be activated in the target cell.

17. An apparatus for activating partial resources of cell and for use in a first base station, comprising:
a first transmitting module, used for transmitting a first request message to a second base station to which a target cell belongs, wherein the first request message is used, by the second base station, to determine a synchronization signal and physical broadcast channel, PBCH, block, SSB, beam that needs to be activated and/or bandwidth that needs to be activated in the target cell,
wherein the first request message comprises at least one of the following:
first indication information, used to indicate one or more SSB beams requested to be activated;
second indication information, used to indicate SSB beams to which locations of target terminals belong;
location information of target terminals;
a bandwidth part requested to be activated; or
to-be-offloaded service volume and service volume of each target terminal; and
an area where the target cell provides services is within a range of an area where a first cell provides services, the first cell belongs to the first base station, and the target terminals are terminals connected to the first cell.

18. The apparatus of claim 17, wherein before transmitting the first request message to the second base station to which the target cell belongs, the first transmitting module is further used for:
determining the first request message based on measurement results reported from the target terminals and configuration information of the second base station, and/or service volume of the target terminals and carrying capacity of the first cell,
wherein the measurement results reported from the target terminals at least comprise measurement results for one or more SSB beams in the target cell, and the configuration information of the second base station at least comprises a coverage area of each SSB beam corresponding to the target cell.

19. The apparatus of claim 17, wherein the apparatus further comprises an obtaining module, which is used for:
obtaining an activated SSB beam and/or activated bandwidth in the target cell based on a received response message transmitted from the second base station,
wherein the response message transmitted from the second base station comprises any or any combination of the activated SSB beam, an unactivated SSB beam or the activated bandwidth.

20. The apparatus of claim 19, wherein the apparatus further comprises a first determining module, which is used for:
determining the target terminals that need to be handed over to the target cell based on a coverage area corresponding to the activated SSB beam and the location information of the target terminals, and/or the activated bandwidth and the service volume of each target terminal.

21. The apparatus of claim 18, wherein the measurement results reported from the target terminals comprise beam-level measurement results and the location information of the target terminals, wherein the beam-level measurement results comprise measurement results of one or more SSB beams in a same target cell and measurement results of one or more SSB beams in different target cells.

22. The apparatus of claim 18, wherein the configuration information of the second base station comprises configuration information of SSB beam corresponding to all target cells belong to the second base station; and the configuration information of the SSB beam comprises a coverage area corresponding to each SSB beam.

23. An apparatus for activating partial resources of cell and for use in a second base station, comprising:
a determining module, used for determining a synchronization signal and physical broadcast channel, PBCH, block, SSB, beam that needs to be activated and/or bandwidth that needs to be activated in a target cell based on a first request message transmitted from a first base station; and
a second transmitting module, used for transmitting a response message to the first base station, wherein the response message comprises any or any combination of an activated SSB beam, an unactivated SSB beam or activated bandwidth in the target cell,
wherein the first base station is a base station to which all first cells providing services to target terminals belong, and areas where the first cells provide services comprise areas where all the target cells provide services, and the target cells belong to the second base station.

24. An apparatus for activating partial resources of cell and for use in a terminal, comprising:
a third transmitting module, used for reporting a measurement result to a first cell that provides services for the terminal, wherein the measurement result at least comprises a beam-level measurement result, the beam-level measurement result comprises measurement results of one or more SSB beams in a same target cell and measurement results of one or more SSB beams in different target cells; the first cell belongs to a first base station, the target cells belong to a second base station, and an area where the first cell provides services comprises an area where the target cell provides services; and
the beam-level measurement results of SSB beam are used, by the first base station, to determine SSB beams and/or bandwidth that need to be activated in the target cell.

25. A computer readable storage medium storing a computer program that causes a computer to perform the method of any of claims 1 to 6, or perform the method of claim 7, or perform the method of claim 8.
